# EUROPÄISCHE PATENTSCHRIFT

(11) **EP 1 603 978 B1**
(45) Veröffentlichungstag und Bekanntmachung des Hinweises auf die Patenterteilung: **21.03.2012**
(21) Anmeldenummer: 03792215.0
(22) Anmeldetag: 18.07.2003
(51) Int. Cl.: C09C 1/36

(54) **VERFAHREN ZUR OBERFLÄCHENBEHANDLUNG EINES TITANDIOXID-PIGMENTS**
METHOD FOR SURFACE TREATMENT OF A TITANIUM DIOXIDE PIGMENT
PROCEDE DE TRAITEMENT DE LA SURFACE D'UN PIGMENT DE DIOXYDE DE TITANE

(30) Priorität: 08.08.2002 DE 10236366
(43) Veröffentlichungstag der Anmeldung: 14.12.2005
(73) Patentinhaber: KRONOS INTERNATIONAL, INC., 51307 Leverkusen (DE)
(72) Erfinder: DREWS-NICOLAI, Lydia, 51067 Köln (DE); BLUEMEL, Siegfried, 40883 Ratingen (DE); ELFENTHAL, Lothar, 40764 Langenfeld (DE); SCHMITT, Volker, 42799 Leichlingen (DE)
(86) Internationale Anmeldenummer: PCT/EP2003/007887
(87) Internationale Veröffentlichungsnummer: WO 2004/018568

(56) Entgegenhaltungen:
- EP-A- 0 406 194
- GB-A- 724 751
- GB-A- 1 349 089
- GB-A- 2 042 573
- US-A- 3 926 660

## Beschreibung

Die Erfindung betrifft ein Verfahren zur Oberflächenbehandlung eines Titandioxid-Pigments, ein Titandioxid-Pigment mit hoher Vergrauungsstabilität und hohem Deckvermögen und seine Verwendung bei der Herstellung von Dekorpapier.

Dekorpapier ist ein Bestandteil einer dekorativen Duroplastoberfläche, die vorzugsweise zur Veredlung von Möbeloberflächen und für Laminat-Fußböden eingesetzt wird. Als Laminate werden Schichtpress-Stoffe bezeichnet, in denen beispielsweise Holz und Papier mit Harz verpresst sind. Durch die Verwendung von speziellen Kunstharzen wird eine außerordentlich hohe Kratz-, Stoß-, Chemikalien- und Hitzebeständigkeit der Laminate erreicht.

Die Verwendung von Spezialpapieren (Dekorpapieren) ermöglicht die Herstellung dekorativer Oberflächen, wobei das Dekorpapier nicht nur als Deckpapier für unattraktive Holzwerkstoffoberflächen, sondern auch als Träger für das Kunstharz dient.

Zu den Anforderungen, die an ein Dekorpapier gestellt werden, gehören u.a. Deckvermögen (Opazität), Lichtechtheit (Vergrauungsstabilität), Farbechtheit, Nassfestigkeit, Imprägnierbarkeit und Bedruckbarkeit.

Um die erforderliche Opazität des Dekorpapiers zu erzielen, ist ein Pigment auf Basis Titandioxid prinzipiell hervorragend geeignet. Bei der Papierherstellung wird in der Regel ein Titandioxid-Pigment bzw. eine Titandioxid-Pigment-Suspension mit einer Faser-Suspension vermengt. Die Wechselwirkungen der einzelnen Komponenten (Fasern, Pigment, Wasser) untereinander tragen zur Papierblattbildung bei und bestimmen die Retention des Pigments. Unter Retention versteht man das Rückhaltevermögen aller anorganischen Stoffe im Papier bei der Herstellung.

Neben den Einsatzstoffen Pigment und Fasern kommen im allgemeinen auch Hilfs- und Zusatzstoffe zum Einsatz. Diese können die Wechselwirkungsmechanismen zwischen Fasern, Pigment und Wasser beeinflussen.

Für die Anwendung im Dekorpapier existieren eine Reihe von Titandioxid-Pigmenten. Neben den wichtigsten Eigenschaften wie Retention und Opazität (Deckvermögen) spielt die Vergrauungsstabilität eine entscheidende Rolle.

Es ist bekannt, dass Titandioxid photochemisch aktiv ist. Ein mit Titandioxid pigmentiertes Dekorpapier weist unter Einwirkung von UV-Strahlung in Gegenwart von Feuchte eine zunehmende Vergrauung auf. Zur Vermeidung dieses Problems werden die Pigmente mit unterschiedlichen Stoffen oberflächenbehandelt, beispielsweise mit Al₂O₃ aquat. und einem farblosen Metallphosphat (US 3 926 660), mit Zinkphosphat (US 5 114 486), mit Cerphosphat und Aluminiumphosphat (GB 2 042 573) oder nur mit Aluminiumphosphat (EP 0 753 546 A2). In der DE 15 92 873 wird ein Verfahren zur Verbesserung der Pigment-Lichtbeständigkeit beschrieben, bei dem im Anschluss an die Beschichtung mit magnesiumsilikat eine Glühung bei 600 °C stattfindet.

Ein TiO₂-Pigment mit verbesserten Retentionseigenschaften, dessen Kern mit aufeinanderfolgenden Schichten von Aluminiumoxidphosphat, Aluminiumoxid und Magnesiumoxid überzogen ist, wird in der EP 0 713 904 B1 vorgestellt.

Beim Einsatz von Pigmenten aus diesen Verfahren in Laminaten geht allerdings eine Verbesserung in der Opazität einher mit einer Verschlechterung in der Vergrauungsstabilität.

Aufgabe der Erfindung ist es daher, ein Verfahren anzugeben, mit dem Pigmente mit hohem Deckvermögen und gleichzeitig hoher Vergrauungsstabilität für den Einsatz in Dekorpapieren hergestellt werden können.

Die Aufgabe wird dergestalt gelöst, dass ein Titandioxid-Pigment einer Oberflächenbehandlung unterzogen wird, die durch folgende Verfahrensschritte gekennzeichnet ist:
a) Herstellen einer wässrigen Suspension von Titandioxid-Grundkörper,
b) Zugabe einer Phosphorverbindung,
c) Zugabe einer Titanverbindung,
d) Zugabe einer Aluminiumverbindung,
e) Einstellen des pH-Werts der Suspension auf einen pH-Wert von 8 bis 10 bevorzugt 8,5 bis 9,5
f) Zugabe einer Magnesiumverbindung,
g) Stabilisieren des pH-Werts der Suspension im Bereich von 8 bis 10 bevorzugt 8,5 bis 9,5,
h) Abtrennen des TiO₂-Pigments durch Filtration, anschließendes Waschen, Trocknen und
Mahlen des Pigments.
Weitere vorteilhafte Verfahrensvarianten sind in den Unteransprüchen beschrieben.

Gegenstand der Erfindung ist also ein Verfahren zur Oberflächenbehandlung von Titandioxid-Pigmenten, das zu Pigmenten mit hohem Deckvermögen und hoher Retention und gleichzeitig hoher Vergrauungsstabilität führt.

Ein TiO₂-Pigment, dessen Kern mit einer Magnesium-, Titan- und Magnesiumphosphatschicht überzogen ist, wird in GB724751 vorgestellt. Ein TiO₂-Pigment, dessen Kern mit einer Titan-, Zirkonium- und Aluminiumphosphatschicht überzogen ist, wird in EP0406194 beschrieben. Es hat sich überraschend gezeigt, dass durch die Zugabe einer Titanverbindung während der anorganischen Oberflächenbehandlung des Pigments mit Phosphör- und Aluminiumverbindungen sowohl eine hohe Opazität als auch eine sehr gute Vergrauungsstabilität erreicht werden können.

Die Oberflächenbehandlung geht aus von einem TiO₂-Grundkörper, vorzugsweise hergestellt nach dem Chloridprozess. Unter TiO₂-Grundkörper versteht man das noch nicht nachbehandelte TiO₂-Rohpigment. Der Grundkörper kann zunächst gemahlen werden, beispielsweise in einem Nassmahlverfahren. Vorzugsweise wird bei der Nassmahlung ein Dispergiermittel zugegeben. Mit dem gemahlenen Grundkörper wird eine wässrige Suspension hergestellt. Diese Suspension kann basisch oder sauer eingestellt sein, bevorzugt wird von einer basischen Suspension ausgegangen mit einem pH-Wert von 9 bis 11. Das Verfahren wird bei einer Temperatur von unter 70 °C durchgeführt, bevorzugt bei 55 bis 65 °C.

Zu der Suspension wird eine Phosphorverbindung gegeben in einer Menge von 0,4 bis 6,0 Gew.-%, bevorzugt 1,0 bis 4,0 Gew.-% gerechnet als P₂O₅ bezogen auf TiO₂-Grundkörper. Besonders gute Ergebnisse werden mit P₂O₅-Gehalten von 1,6 bis 2,8 Gew.-% bezogen auf Grundkörper erreicht. Geeignete Phosphorverbindungen sind vorzugsweise anorganische Phosphorverbindungen wie Alkaliphosphate, Ammoniumphosphat, Polyphosphate, Phosphorsäure oder gegebenenfalls Mischungen dieser Verbindungen. Es sind aber auch andere anorganische Phosphorverbindungen einsetzbar.

Des weiteren wird eine Titanverbindung zugegeben, z. B. Titanylsulfat, Titanylchlorid oder eine andere hydrolisierbare Titanverbindung oder Mischungen dieser Verbindungen. Die zugegebene Menge der Titanverbindung beträgt 0,1 bis 3,0 Gew.-% bevorzugt 0,1 bis 1,5 Gew.-% und insbesondere 0,1 bis 1,0 Gew.-% gerechnet als TiO₂ bezogen auf TiO₂-Grundkörper in der Suspension.

Nachfolgend wird eine Aluminiumverbindung sauren oder basischen Charakters in die Suspension gegeben. Besonders geeignet als saure Aluminiumverbindung ist Aluminiumsulfat, dies ist jedoch nicht als Einschränkung zu verstehen. Als alkalische Aluminiumverbindungen kommen Natriumaluminat, alkalisches Aluminiumchlorid, alkalisches Aluminiumnitrat oder andere alkalische Aluminiumsalze oder Mischungen dieser Verbindungen in Frage.

Üblicherweise wird man nach jeder Zugabe die Suspension etwa 30 min rühren, um eine Homogenisierung zu erreichen. Es ist jedoch auch möglich, die Titanverbindung und die Aluminiumverbindung gleichzeitig zuzugeben.

Eine besondere Ausführung des Verfahrens besteht darin, dass parallel zur Aluminiumverbindung eine Säure oder Lauge oder eine zweite Aluminiumverbindung zugegeben wird, um den pH-Wert konstant im Bereich von 2 bis 10 bevorzugt im Bereich von 4 bis 9 und insbesondere im Bereich von 6 bis 8 zu halten. Bei einer besonders vorteilhaften Verfahrensvariante wird der pH-Wert durch die austarierte parallele Zugabe von Natriumaluminat und HCl gesteuert. Eine andere Verfahrensweise besteht darin, den pH-Wert durch eine gesteuerte Zugabe von Aluminiumsulfat und Natriumaluminat konstant zu halten.

Nachfolgend wird die Suspension auf einen pH-Wert von 8 bis 10 vorzugsweise 8,5 bis 9,5 eingestellt. Die Einstellung des pH-Werts nimmt der Fachmann in üblicher Art mit Hilfe entsprechender saurer oder alkalischer Verbindungen vor. Als Alkalien kommen dabei beispielsweise alkalische Aluminiumsalze wie Natriumaluminat, alkalisches Aluminiumchlorid, alkalisches Aluminiumnitrat oder Laugen wie Natronlauge oder Ammoniak oder eine Kombination dieser Alkalien zum Einsatz.

Die Gesamtmenge an Aluminium in der Suspension, eingetragen durch die verschiedenen Aluminiumverbindungen beträgt 2,0 bis 7,5 Gew.-% bevorzugt 3,5 bis 7,5 Gew.-% gerechnet als Al₂O₃ bezogen auf TiO₂-Grundkörper.

Anschließend wird 0,1 bis 1 Gew.-% bevorzugt 0,2 bis 0,5 Gew.-% einer Magnesiumverbindung gerechnet als MgO bezogen auf TiO₂-Grundkörper zugegeben. Als Magnesiumverbindung eignen sich wasserlösliche Magnesiumsalze wie Magnesiumsulfat, Magnesiumchlorid und andere Magnesiumsalze sowie Mischungen dieser Verbindungen. Der pH-Wert soll bei 8 bis 10 bevorzugt bei 8,5 bis 9,5 gehalten werden, falls erforderlich mit Hilfe geeigneter alkalischer Medien.

Im Anschluss wird das nachbehandelte TiO₂-Pigment durch Filtration von der Suspension abgetrennt und der entstandene Filterkuchen gewaschen.

Zur weiteren Verbesserung der Vergrauungsstabilität kann das Pigment zusätzlich mit Nitrat behandelt werden in einer Konzentration von bis 1,0 Gew.-% NO₃ im fertigen Pigment.

Darüberhinaus kann der End-pH-Wert des fertigen Pigments durch Zugabe einer geeigneten Substanz bzw. einer Mischung von geeigneten Substanzen eingestellt werden. Die Steuerung des pH-Werts erfolgt über den Säurecharakter und über die eingesetzte Menge der Substanz. Grundsätzlich geeignet sind Verbindungen, die die optischen Pigmenteigenschaften nicht beeinträchtigen, die temperaturstabil sind in Hinblick auf die abschließende Pigmenttrocknung bzw. Mahlung und die entweder der Filterpaste, im Trockner oder bei der Dampfmahlung zugegeben werden können. Beispielsweise kommen Säuren wie Schwefelsäure, Salpetersäure oder Salzsäure oder auch Zitronensäure in Frage oder saure Salze wie saure Chloride, Sulfate oder dergleichen, die die angegebenen Bedingungen erfüllen.

Insbesondere bieten sich Nitratverbindungen an. Bei der Verwendung von Natriumnitrat liegt der End-pH-Wert des Pigments bei über 9. Eine pH-Erniedrigung kann durch die Verwendung von sauren Nitratverbindungen oder eine Kombination von sauren und nichtsauren Nitratverbindungen, beispielsweise: Aluminiumnitrat, Gemisch aus Aluminiumnitrat und Natriumnitrat, Gemisch aus Aluminiumnitrat und Salpetersäure usw. erreicht werden. Beispielsweise führt die Zugabe von 0,4 Gew.-% Aluminiumnitrat gerechnet als NO₃ in die Filterpaste zu einer Absenkung des End-pH-Werts auf etwa 8.

Abschließend erfolgt die Trocknung und Mahlung des Pigments.

Das nach diesem Verfahren hergestellte Pigment zeigt gegenüber den Vergleichspigmenten im Laminat verbessertes Deckvermögen und verbesserte Vergrauungsstabilität sowie gute Retention und ist für den Einsatz im Dekorpapier hervorragend geeignet.

### Beispiele:

Im folgenden ist die Erfindung beispielhaft beschrieben. Sofern nicht anders angegeben, beziehen sich die Mengenangaben auf Grundkörper TiO₂ in der Suspension.

### Beispiel 1

Eine Suspension von Titandioxid aus dem Chloridprozess wird nach Sandmahlung mit einer TiO₂-Konzentration von 400 g/l bei 60 °C mit NaOH auf einen pH-Wert von 10 eingestellt. Unter Rühren werden der Suspension 2,4 Gew.% P₂O₅ als Dinatriumhydrogenphosphat-Lösung zugefügt. Die Zugabezeit beträgt 60 Minuten. Anschließend werden nach einer Rührzeit von 30 Minuten 0,2 Gew.-% TiO₂ in Form von Titanylsulfat-Lösung zugegeben. Es folgt eine weitere Rührzeit von 30 Minuten. Der Suspension wird im nächsten Schritt innerhalb von 30 Minuten 2,7 Gew.-% Al₂O₃ als saure Aluminumsulfat-Lösung zugemischt. Die saure Suspension wird nach einer Rührzeit von 30 Minuten mit Hilfe einer alkalischen Natriumaluminat-Lösung in der Menge von 3,7 Gew.-% gerechnet als Al₂O₃ auf einen pH-Wert von 9,0 eingestellt. Die Zugabezeit beträgt 40 Minuten. Im Anschluss an eine Rührzeit von 30 Minuten erfolgt die Zugabe von 0,5 Gew.-% MgO als Magnesiumsulfat-Lösung. Die Suspension wird nach 30 Minuten Rührzeit mit NaOH auf einen pH-Wert von 9 eingestellt. Die nachbehandelte TiO₂-Suspension wird nach einer weiteren Rührzeit von zwei Stunden filtriert und gewaschen. Die gewaschene Filterpaste wird nach Zugabe von 0,25 Gew.-% NO₃ als NaNO₃ bezogen auf Ti02-Pigment in einem Sprühtrockner getrocknet und anschließend dampfgemahlen.

### \/ergieichsbeispiel 1

Das Pigment wird in vergleichbarer Weise wie unter Beispiel 1 beschrieben hergestellt, außer dass Titanylsulfat und Magnesiumsulfat nicht Bestandteile der Nachbehandlung sind. Der sandgemahlenen TiO₂-Suspension (400g/l TiO₂), die eine Temperatur von 60°C und einen pH-Wert von 10 aufweist, wird unter Rühren 2,4 Gew.-% P₂O₅ als Dinatriumhydrogenphosphat-Lösung zugefügt. Der Suspension werden im nächsten Schritt 3,0 Gew.-% Al₂O₃ als saure Aluminumsulfat-Lösung zugemischt. Die saure Suspension wird mit Hilfe einer alkalischen Natriumaluminat-Lösung in einer Menge von 3,4 Gew.-% gerechnet als Al₂O₃ auf einen pH-Wert von 7,2 eingestellt. Die weitere Aufarbeitung (Filtrieren, Waschen, Nitratbehandlung, Trocknen, Mahlen) entspricht Beispiel 1.

### Vergleichsbeippiel 2

Das Pigment wird in vergleichbarer Weise wie unter Beispiel 1 beschrieben hergestellt, außer dass Titanylsulfat nicht Bestandteil der Nachbehandlung ist.

Der sandgemahlenen TiO₂-Suspension (400g/l TiO₂), die eine Temperatur von 60°C und einen pH-Wert von 10 aufweist, wird unter Rühren 2,4 Gew.-% P₂O₅ als Dinatriumhydrogenphosphat-Lösung zugefügt. Der Suspension werden im nächsten Schritt 2,6 Gew.-% Al₂O₃ als saure Aluminiumsulfat-Lösung zugemischt. Die saure Suspension wird mit Hilfe einer alkalischen Natriumaluminat-Lösung in der Menge von 3,0 Gew.-% gerechnet als Al₂O₃ auf einen pH-Wert von 9,2 eingestellt. Im Anschluss erfolgt die Zugabe von 0,5 Gew.-% MgO als Magnesiumsulfat-Lösung. Mit NaOH wird ein pH-Wert von 9 eingestellt. Die weitere Aufarbeitung entspricht Beispiel 1 und Vergleichsbeispiel 1.

### Testmethoden

Die auf diese Weise hergestellten Titandioxid-Pigmente wurden in Dekorpapier auf Basis Melaminharz eingearbeitet und anschließend hinsichtlich ihrer optischen Eigenschaften und Vergrauungsresistenz,in verpressten Laminaten untersucht. Dazu wurde das zu prüfende Titandioxid-Pigment in Zellulose eingearbeitet und Blätter mit einem Blattgewicht von etwa 100 g/m² und einem TiO₂-Massenanteil von etwa 40 % hergestellt.

### a) Laminatherstellung (Labormaßstab)

Es wird eine 36,5 %ige wässrige Pigmentsuspension aus 146 g Titandioxid-Pigment und 254 Leitungswasser hergestellt. Für die Testung werden 30 g Zellstoff (ofentrocken) zugrunde gelegt. Die entsprechende Menge Pigmentsuspension wird an die Retention und den gewünschten Aschegehalt, hier 40 % ± 1, bzw. das Flächengewicht, hier 100 g/m2 ± 1, angepasst. Die Vorgehensweise und die eingesetzten Hilfsstoffe sind dem Fachmann bekannt.

Aschegehalt (Titandioxid-Gehalt) eines Blattes sowie Retention des Pigments werden anschließend bestimmt. Zur Bestimmung des Aschegehalts wird eine definierte Gewichtsmenge des hergestellten Papiers mit einem Schnellverascher bei 900 °C verascht. Über die Auswaage des Rückstands ist der Massenanteil an TiO₂ (entspricht dem Aschegehalt) zu berechnen.

Unter Retention versteht man das Rückhaltevermögen aller anorganischen Stoffe im Papierblatt auf dem Sieb der Papiermaschine. Die sogenannte One-Pass-Retention gibt den prozentualen Anteil an, der beim einmaligen Beschickungsvorgang der Papiermaschine zurückgehalten wird. Der prozentuale Anteil der Asche bezogen auf den Massenanteil des eingesetzten Pigments am Gesamtfeststoff der Suspension ergibt die Retention.

Die weitere Verarbeitung des Papiers umfasst die Imprägnierung und Verpressung zu Laminaten. Das zu beharzende Blatt wird in eine Harzlösung eingetaucht und für 25 Sekunden im Umlufttrockenschrank bei 130 °C vorkondensiert. Entsprechend erfolgt eine zweite Imprägnierung, wobei die Verweilzeit im Trockenschrank 110 Sekunden beträgt. Das Blatt hat eine Restfeuchte von 4 bis 6 Gew.-%. Die kondensierten Blätter werden mit Phenolharz getränkten Kernpapieren, weißem und schwarzem Underlay-Papier zu Presspaketen zusammengelegt.

Bei dem Versuch bestand der Laminataufbau aus 9 Schichten: Papier, Papier, Kernpapier, Kernpapier, Gegenzug aus schwarzem Underlay, Kernpapier, Kernpapier, schwarz/weißes Underlay, Papier.

Das Pressen der Pakete erfolgt mit Hilfe einer Wickert Laminat-Presse Typ 2742 bei einer Temperatur von 140 °C und einem Druck von 90 bar für eine Presszeit von 300 Sekunden.

### b) Testung

Die Messung der optischen Eigenschaften und der Vergrauungsstabilität der Laminate erfolgte mit handelsüblichen Geräten (Spektralphotometer, Xenotestgerät).

Zur Beurteilung der optischen Eigenschaften von Schichtpress-Stoffen werden die Farbwerte (CIELAB L*, -a*, -b*) nach DIN 6174 mit Hilfe des ELREPHO^{®} 3300-Farbmessgeräts über weißem und schwarzem Underlay bestimmt. Die Opazität ist ein Maß für die Lichtdurchlässigkeit oder Transmission des Papiers. Als Maß der Opazität der Laminate wurden folgende Größen gewählt: CIELAB L*_{schwarz}, die Helligkeit der Laminate gemessen" über schwarzem Underlay-Papier, und der Opazitätswert L [%] = Y_{schwan}/Y_{weiß}x100, ermittelt aus dem Y-Wert gemessen über schwarzem Unterlay-Papier (Y_{schwarz}) und dem Y-Wert über weißem Underlay-Papier (Y_{weiß}).

Die Werte werden mit einem Spektralphotometer (ELREPHO^{®} 3300) gemessen. Zur Beurteilung der Vergrauungsstabilität (Lichtechtheit) der Titandioxid-Pigmente bzw. der Titandioxid-Pigmentmischungen werden die entsprechenden Laminatmuster in einem XENOTEST^{®} 150S belichtet. Für die Beurteilung wird die Seite des Laminats, auf der zwei Papiere miteinander verpresst werden, gemessen. Es werden die Farbwerte CIELAB L*, a* und b* nach DIN 6174 vor und nach einer Dauer von 96 Stunden Belichtung im XENOTEST^{®} 150S gemessen. Die Lichtquelle ist eine Xenon-Bogen-Lampe. Die Temperatur im Innenraum des Gerätes liegt bei 23 ± 3 °C, die relative Feuchte bei 65 ± 5 %. Die Proben werden im "Wendelauf" belichtet. Als Maß für die Vergrauungsstabilität werden sowohl ΔL* = L*ᵥₒᵣₕₑᵣ - L*_{nacher} als auch ΔE* = ((ΔL*)² + (Δa*)² + (Δb*)²)^{1/2} angegeben

### Testergebnisse:

Die Testergebnisse für die mit dem erfindungsgemäßen Beispiel-Pigment und mit den Vergleichsbeispiel-Pigmenten 1 und 2 hergestellten Laminate sind in der Tabelle zusammengefasst. Alle drei Beispiele bzw. Vergleichsbeispiele sind auf gleiche Aschegehalte eingestellt.

Es zeigt sich, dass das mit dem erfindungsgemäßen Pigment hergestellte Laminat (Beispiel 1) sich sowohl durch hohe Opazität (L*_{schwarz} und L) als auch durch hohe
Vergrauungsstabilität (ΔL* und ΔE*) auszeichnet. Die mit den beiden Vergleichspigmenten 1 und 2 hergestellten Laminate fallen dagegen entweder bei der Opazität (Vergleichsbeispiel 1) oder bei der Vergrauungsstabilität (Vergleichsbeispiel 2) signifikant ab. Auch die Retention konnte bei dem mit dem erfindungsgemäßen Pigment hergestellten Papier gegenüber Vergleichsbeispiel 2 verbessert werden.

**Tabelle**

| | **CIELAB Farbwerte** | | | | | | **Opazität** | **Aschegehalt** | **Retention** | **Vergrauungs-** | |
|---|---|---|---|---|---|---|---|---|---|---|---|
| | **über weiß** | | | **über schwarz** | | | | | **(one-pass)** | **stabilität** | |
| | **L*** | **a*** | **b*** | **L*** | **a*** | **b*** | **L [%]** | **[Gew.-%]** | **[Gew.-%]** | Δ**L*** | Δ**E*** |
| **Beispiel 1** | 93,1 | -1,2 | 2,6 | 90,9 | -1,3 | 0,5 | 94,1 | 40,4 | 74 | 1,0 | 1,5 |
| **Vergleichs-beispiel1** | 92,9 | -1,2 | 2,8 | 90,2 | -1,3 | 0,5 | 92,8 | 40,6 | 75 | 1,1 | 1,6 |
| **Vergleichs-beispiel 2** | 93,2 | -1,2 | 2,5 | 90,9 | -1,2 | 0,4 | 93,7 | 40,5 | 72 | 1,3 | 1,8 |

| | | | | | | | | | | | |
|---|---|---|---|---|---|---|---|---|---|---|---|
| Bei allen Testungen betrug das Flächengewicht 100 g/m². | | | | | | | | | | | |

## Patentansprüche

1. Verfahren zur Oberflächenbehandlung eines Titandioxid-Pigments **gekennzeichnet durch** folgende Schritte:
a) Herstellen einer wässrigen Suspension von Titandioxid-Grundkörper,
b) Zugabe einer Phosphorverbindung.
c) Zugabe einer Titanverbindung,
d) Zugabe einer Aluminiumverbindung,
e) Einstellen des pH-Werts der Suspension auf einen Wert von 8 bis 10 bevorzugt 8,5 bis 9,5,
f) Zugabe einer Magnesiumverbindung,
g) Stabilisieren des pH-Werts der Suspension im Bereich von 8 bis 10 bevorzugt 8,5 bis 9,5,
h) Abtrennen des TiO₂-Pigments **durch** Filtration, anschließendes Waschen, Trocknen und Mahlen des Pigments

2. Verfahren nach Anspruch 1 **dadurch gekennzeichnet, dass** die zugegebene Phosphorverbindung eine anorganische Phosphorverbindung ist.

3. Verfahren nach Anspruch 2 **dadurch gekennzeichnet, dass** die anorganische Phosphorverbindung ausgewählt ist aus der Gruppe bestehend aus Alkaliphosphaten, Ammoniumphosphaten, Polyphosphaten, Phosphorsäure und gegebenenfalls Mischungen dieser Verbindungen.

4. Verfahren nach einem oder mehreren der Ansprüche 1 bis 3 **dadurch gekennzeichnet, dass**
die Menge der zugegebenen Phosphorverbindung 0,4 bis 6,0 Gew.-% bevorzugt 1,0 bis 4,0 Gew.-% und insbesondere 1,6 bis 2,8 Gew.-% beträgt gerechnet als P₂O₅ bezogen auf TiO₂-Grundkörper in der Suspension.

5. Verfahren nach Anspruch 1 **dadurch gekennzeichnet, dass** die zugegebene Titanverbindung ausgewählt ist aus der Gruppe bestehend aus Titanylsulfat, Titanylchlorid und anderen hydrolisierbaren Titanverbindungen sowie Mischungen dieser Verbindungen.

6. Verfahren nach Anspruch 1 oder 5 **dadurch gekennzeichnet, dass** die Menge der zugegebenen Titanverbindung 0,1 bis 3,0 Gew.% bevorzugt 0,1 bis 1,5 Gew.-% und insbesondere 0,1 bis 1;0 Gew.-% beträgt gerechnet als TiO₂ bezogen auf TiO₂-Grundkörper in der Suspension.

7. Verrahren nach Anspruch 1 **dadurch gekennzeichnet, dass** die zugegebene Aluminiumverbindung entweder alkalischen oder sauren Charakter hat.

8. Verfahren nach einem oder mehreren der Ansprüche 1 bis 7 **dadurch gekennzeichnet, dass**
während der Zugabe der Aluminiumverbindung der pH-Wert durch gleichzeitige Zugabe einer Säure oder Lauge konstant gehalten wird, wobei der pH-Wert im Bereich von 2 bis 10 liegt, bevorzugt im Bereich von 4 bis 9 und insbesondere im Bereich von 6 bis 8.

9. Verfahren nach einem oder mehreren der Ansprüche 1 bis 7 **dadurch gekennzeichnet, dass**
bei Verfahrensschritt d) eine saure Aluminiumverbindung zugegeben wird und die Einstellung des pH-Werts gemäß Verfahrensschritt e) mit Hilfe einer alkalischen Aluminiumverbindung oder einer Kombination von einer alkalischen Aluminiumverbindung und einer Lauge erfolgt.

10. Verfahren nach Anspruch 7 und/oder Anspruch 9 **dadurch gekennzeichnet, dass** die alkalische Aluminiumverbindung ausgewählt ist aus der Gruppe bestehend aus Natriumaluminat, alkalischem Aluminiumchlorid, alkalischem Aluminiumnitrat und anderen alkalischen Aluminiumsalzen sowie Mischungen dieser Verbindungen.

11. Verfahren nach einem oder mehreren der Ansprüche 1, 7, 8, 9 und 10 **dadurch gekennzeichnet, dass**
die Gesamtmenge der zugegebenen Aluminiumverbindungen 2,0 bis 7,5 Gew.-% bevorzugt 3,5 bis 7,5 Gew.-% beträgt gerechnet als Al₂O₃ bezogen auf TiO₂-Grundkörper.

12. Verfahren nach Anspruch 1 **dadurch gekennzeichnet, dass** die zugegebene Magnesiumverbindung ausgewählt ist aus der Gruppe bestehend aus wasserlöslichen Magnesiumsalzen wie Magnesiumsulfat, Magnesiumchlorid und anderen wasserlöslichen Magnesiumsalzen sowie Mischungen dieser Verbindungen.

13. Verfahren nach Anspruch 1 oder 12 **dadurch gekennzeichnet, dass** die Menge der zugebenen Magnesiumverbindung 0,1 bis 1,0 Gew.-% bevorzugt 0,2 bis 0,5 Gew.-% beträgt gerechnet als MgO bezogen auf TiO₂-Grundkörper in der Suspension.

14. Verfahren nach einem oder mehreren der Ansprüche 1 bis 13 **dadurch gekennzeichnet, dass**
das Pigment zur Beeinflussung des End-pH-Werts mit einer Substanz oder einer Mischung aus Substanzen behandelt wird, wobei der End-pH-Wert über den Säurecharakter und über die eingesetzte Menge der Verbindungen eingestellt wird.

15. Verfahren nach Anspruch 14 **dadurch gekennzeichnet, dass** die eingesetzten Substanzen Nitratverbindungen insbesondere Aluminiumnitrat sind.

16. Verfahren nach einem oder mehreren der Ansprüche 1 bis 15 **dadurch gekennzeichnet, dass**
das fertige, mit Nitrat behandelte Pigment bis zu 1,0 Gew.-% NO₃ enthält.

17. Verfahren nach einem oder mehreren der Ansprüche 1 bis 16 **dadurch gekennzeichnet, dass**
der Titandioxid-Grundkörper zunächst gemahlen wird.

18. Verfahren nach Anspruch 17 **dadurch gekennzeichnet, dass** der Titandioxid-Grundkörper nass gemahlen wird und bei der Mahlung gegebenenfalls ein Dispergiermittel zugesetzt wird.

## Claims

1. Method for the surface treatment of a titanium dioxide pigment, **characterised by** the following steps:
a) Preparation of an aqueous suspension of titanium dioxide base material,
b) Addition of a phosphorus compound,
c) Addition of a titanium compound,
d) Addition of an aluminium compound,
e) Adjustment of the pH value of the suspension to a value of 8 to 10, preferably 8.5 to 9.5,
f) Addition of a magnesium compound,
g) Stabilisation of the pH value of the suspension in the range from 8 to 10, preferably 8.5 to 9.5,
h) Separation of the TiO₂ pigment by filtration, followed by washing, drying and milling of the pigment.

2. Method according to Claim 1, **characterised in that**
the added phosphorus compound is an inorganic phosphorus compound.

3. Method according to Claim 2, **characterised in that**
the inorganic phosphorus compound is selected from the group consisting of alkali phosphates, ammonium phosphates, polyphosphates, phosphoric acid and, where appropriate, mixtures of these compounds.

4. Method according to one or more of Claims 1 to 3, **characterised in that** the quantity of phosphorus compound added is 0.4 to 6.0% by weight, preferably 1.0 to 4.0% by weight and particularly 1.6 to 2.8% by weight, calculated as P₂O₅, referred to TiO₂ base material in the suspension.

5. Method according to Claim 1, **characterised in that**
the titanium compound added is selected from the group consisting of titanyl sulphate, titanyl chloride and other hydrolysable titanium compounds, as well as mixtures of these compounds.

6. Method according to Claim 1 or 5, **characterised in that**
the quantity of titanium compound added is 0.1 to 3.0% by weight, preferably 0.1 to 1.5% by weight and particularly 0.1 to 1.0% by weight, calculated as TiO₂, referred to TiO₂ base material in the suspension.

7. Method according to Claim 1, **characterised in that**
the aluminium compound added is of either alkaline or acidic character.

8. Method according to one or more of Claims 1 to 7, **characterised in that**,
during the addition of the aluminium compound, the pH value is maintained constant by the simultaneous addition of an acid or a base, the pH value being in the range from 2 to 10, preferably in the range from 4 to 9 and particularly in the range from 6 to 8.

9. Method according to one or more of Claims 1 to 7, **characterised in that** an acidic aluminium compound is added in process step d), and the adjustment of the pH value according to process step e) is accomplished with the help of an alkaline aluminium compound or a combination of an alkaline aluminium compound and a base.

10. Method according to Claim 7 and/or Claim 9, **characterised in that** the alkaline aluminium compound is selected from the group consisting of sodium aluminate, alkaline aluminium chloride, alkaline aluminium nitrate and other alkaline aluminium salts, as well as mixtures of these compounds.

11. Method according to one or more of Claims 1, 7, 8, 9 and 10, **characterised in that** the total quantity of the aluminium compounds added is 2.0 to 7.5% by weight, preferably 3.5 to 7.5% by weight, calculated as Al₂O₃, referred to TiO₂ base material.

12. Method according to Claim 1, **characterised in that**
the magnesium compound added is selected from the group consisting of water-soluble magnesium salts, such as magnesium sulphate, magnesium chloride and other water-soluble magnesium salts, as well as mixtures of these compounds.

13. Method according to Claim 1 or 12, **characterised in that**
the quantity of magnesium compound added is 0.1 to 1.0% by weight, preferably 0.2 to 0.5% by weight, calculated as MgO, referred to TiO₂ base material in the suspension.

14. Method according to one or more of Claims 1 to 13, **characterised in that** the pigment is treated with a substance or a combination of substances in order to influence the final pH value whereas the final pH value is controlled by the acidity and the quantity of the added substance.

15. Method according to Claim 14, **characterised in that**
the added substances are nitrate compounds, especially aluminium nitrate.

16. Method according to one or more of Claims 1 to 15, **characterised in that** the finished pigment which had been treated with nitrate contains up to 1.0% by weight NO₃

17. Method according to one or more of Claims 1 to 16, **characterised in that** the titanium dioxide base material is first milled.

18. Method according to Claim 17, **characterised in that**
the titanium dioxide base material is wet-milled and, where appropriate, a dispersant is added during milling.

## Revendications

1. Procédé de traitement de surface d'un pigment de dioxyde de titane **caractérisé par** les étapes suivantes :
a) production d'une suspension aqueuse de corps de base de dioxyde de titane,
b) addition d'un composé de phosphore,
c) addition d'un composé de titane
d) addition d'un composé d'aluminium,
e) ajustement du pH de la suspension à une valeur de 8 à 10, de préférence de 8,5 à 9,5,
f) addition d'un composé de magnésium,
g) stabilisation du pH de la suspension dans une plage de 8 à 10, de préférence de 8,5 à 9,5,
h) séparation du pigment de TiO₂ par filtration, ensuite lavage, séchage et broyage du pigment.

2. Procédé selon la revendication 1, **caractérisé en ce que** le composé de phosphore ajouté est un composé de phosphore anorganique.

3. Procédé selon la revendication 2, **caractérisé en ce que** le composé de phosphore anorganique est choisi dans le groupe comprenant les phosphates alcalins, les phosphates d'aluminium, les polyphosphates, l'acide phosphorique et éventuellement des mélanges de ces composés.

4. Procédé selon l'une ou plusieurs des revendications 1 à 3, **caractérisé en ce que**
la quantité de composé de phosphore ajoutée est de 0,4 à 6,0 % en poids, de préférence de 1,0 à 4,0 % en poids et en particulier de 1,6 à 2,8 % en poids, calculée en tant que P₂O₆ par rapport au corps de base de TiO₂ dans la suspension.

5. Procédé selon la revendication 1, **caractérisé en ce que** le composé de titane ajouté est choisi dans le groupe comprenant le sulfate de titanyle, le chlorure de titanyle et d'autres composés de titane hydrolysés et des mélanges de ces composés.

6. Procédé selon la revendication 1 ou 5, **caractérisé en ce que** la quantité du composé de titane ajoutée est de 0,1 à 3,0 % en poids, de préférence de 0,1 à 1,5 % en poids et en particulier de 0,1 à 1,0 % en poids, calculée en tant que TiO₂ par rapport au corps de base de TiO₂ dans la suspension.

7. Procédé selon la revendication 1, **caractérisé en ce que** le composé d'aluminium ajouté a un caractère alcalin ou acide.

8. Procédé selon une ou plusieurs des revendications 1 à 7, **caractérisé en ce que**,
pendant l'addition du composé d'aluminium, le pH est maintenu à un niveau constant par addition concomitante d'un acide ou d'une lessive, le pH étant dans une plage de 2 à 10, de préférence dans une plage de 4 à 9 et en particulier dans une plage de 6 à 8.

9. Procédé selon une ou plusieurs des revendications 1 à 7, **caractérisé en ce que**
à l'étape du procédé d), on ajoute un composé d'aluminium acide et l'ajustement du pH s'effectue selon l'étape du procédé e) à l'aide d'un composé d'aluminium alcalin ou d'une combinaison d'un composé d'aluminium alcalin et d'une lessive.

10. Procédé selon la revendication 7 et/ou la revendication 9, **caractérisé en ce que** le composé d'aluminium alcalin est choisi dans le groupe comprenant l'aluminate de sodium, le chlorure d'aluminium alcalin, le nitrate d'aluminium alcalin et d'autres sels d'aluminium alcalins et des mélanges de ces composés.

11. Procédé selon une ou plusieurs des revendications 1, 7, 8, 9 et 10, **caractérisé en ce que**
la quantité totale de composés d'aluminium aoutée est de 2,0 à 7,5 % en poids, de préférence de 3,5 à 7,5 % en poids calculée en tant que Al₂O₃ par rapport au corps de base de TiO₂.

12. Procédé selon la revendication 1, **caractérisé en ce que** le composé de magnésium ajouté est choisi dans le groupe comprenant
des sels de magnésium hydrosolubles tels que le sulfate de magnésium, le chlorure de magnésium et d'autres sels de magnésium hydrosolubles et des mélanges de ces composés.

13. Procédé selon la revendication 1 ou 12, **caractérisé en ce que**
la quantité du composé de magnésium ajoutée est de 0,1 à 1,0 % en poids, de préférence de 0,2 à 0,5 % en poids calculée en tant que MgO par rapport au corps de base de TiO₂ dans la suspension.

14. Procédé selon une ou plusieurs des revendications 1 à 13, **caractérisé en ce que**
le pigment est traité de façon à influer sur le pH final, avec une substance ou un mélange de substances, le pH final étant ajusté sur le caractère acide et sur la quantité utilisée des composés.

15. Procédé selon la revendication 14, **caractérisé en ce que** les substances utilisées sont les composés de nitrate, en particulier le nitrate d'aluminium.

16. Procédé selon une ou plusieurs des revendications 1 à 15, **caractérisé en ce que**
le pigment fini traité avec un nitrate contient jusqu'à 1,0 % en poids de NO₃.

17. Procédé selon une ou plusieurs des revendications 1 à 16, **caractérisé en ce que**
le corps de base de dioxyde de titane est tout d'abord broyé.

18. Procédé selon la revendication 17, **caractérisé en ce que** le corps de base de dioxyde de titane est broyé à l'état mouillé et lors du broyage, on ajoute éventuellement un agent dispersant.
